# EUROPÄISCHE PATENTANMELDUNG

(11) **EP 2 810 827 A1**
(43) Veröffentlichungstag der Anmeldung: **10.12.2014**
(21) Anmeldenummer: 13170699.6
(22) Anmeldetag: 05.06.2013
(51) Int. Cl.: B60R 9/048, B60P 7/08, B61D 45/00, F16B 2/06

(54) **Sockelelement eines Ladungssicherungssystems zur Anordnung an einem Tragprofil sowie Ladungssicherungssystem**

(71) Anmelder: Spescha, Gery, 7074 Malix (CH)
(72) Erfinder: Spescha, Gery, 7074 Malix (CH)
(74) Vertreter: Patentbüro Paul Rosenich AG

(57) **Zusammenfassung**

Die Erfindung betrifft ein Sockelelement (21) eines Ladungssicherungssystems (71) zur Anordnung an einem Fahrzeug-Dachträger. Das Sockelelement (21) weist einen Basisabschnitt (22) mit zwei in einem Abstand (A) zueinander beabstandeten Seitenkanten (23, 24) und mit einer Anlageseite (27) auf, welche im montierten Zustand des Sockelelementes (21) mit einem Abschnitt des Dachträgers in Anlage kommt. Ein erster Halteabschnitt (31) und ein zweiter Halteabschnitt (41) sind vom Basisabschnitt (22) ausgehend vorgesehen. Zwischen dem ersten Halteabschnitt (31) und der Anlageseite (27) des Basisabschnitts (22) sind ein erster Aufnahmeraumabschnitt (32) zur Aufnahme eines Abschnitts des Dachträgers sowie eine erste Montageöffnung (33) zur Anordnung des Sockelelementes (21) an dem dachträger ausgebildet. Zwischen dem zweiten Halteabschnitt (42) und der Anlageseite (27) des Basisabschnitts (22) sind ein zweiter Aufnahmeraumabschnitt (42) zur Aufnahme eines Abschnitts des Dachträgers sowie eine zweite Montageöffnung (43) zur Anordnung des Sockelelementes (21) an dem Dachträger ausgebildet. Die erste Montageöffnung (33) und die zweite Montageöffnung (43) sind gegensinnig zueinander ausgerichtet. Die Halteabschnitte (31, 41) sind in einem Abstand (E) zueinander beabstandet. Weiter betrifft die Erfindung ein Ladungssicherungssystem mit einem solchen Sockelelement.

## Beschreibung

Die Erfindung betrifft ein Sockelelement eines Ladungssicherungssystems zur Anordnung an einem Tragprofil, insbesondere an einem Fahrzeug-Dachträger, nach dem Oberbegriff des Anspruchs 1. Weiter betrifft die Erfindung ein Ladungssicherungssystem mit einem solchen Sockelelement.

Gegenstände, wie Ladegüter, werden oftmals auf Fahrzeugen transportiert. Weisen diese Gegenstände eine Länge auf, welche länger als die entsprechende Ladefläche des Fahrzeuges ist, oder weist das Fahrzeug selbst keine Ladefläche auf, so werden üblicherweise Tragprofile, insbesondere Dachträger, am Fahrzeug angeordnet. Die Gegenstände werden für den Transport mit Ladungssicherungssystemen am Tragprofil fixiert.

Zu diesem Zweck werden beispielsweise Gummizüge verwendet, welche beispielsweise an ihren freien Enden mit Haken versehen sind. Der zu sichernde Gegenstand wird auf das Tragprofil aufgelegt, ein Haken am Tragprofil festgelegt und anschliessend der Gummizug über den Gegenstand geführt, bis der andere Haken am Tragprofil eingehängt werden kann.

Nachteilig an dieser bekannten Lösung ist, dass das Einhängen der Haken am Tragprofil umständlich ist. Gegebenenfalls muss ein überschüssiger Abschnitt des Gummizugs verknotet oder um das Tragprofil gewickelt werden, bis der noch freie Haken unter Spannung irgendwo am Tragprofil einhängbar ist. Neben einem hohen Verschleiss ist das Entwirren der Gummizüge ein wesentlicher Nachteil derselben. Des Weiteren müssen je nach Gewicht und Volumen des zu sichernden Gegenstandes verschiedene Arten beziehungsweise Ausgestaltungen von Gummizügen dem Anwender zur Verfügung gestellt und entsprechend gelagert beziehungsweise transportiert werden.

Aus der EP 2 353 934 A1 ist ein Spannmittel bekannt, das ein Spannband mit einem Verspannmechanismus in Form einer Spannratsche am einen Ende aufweist. Das Spannband wird um den zu fixierenden Gegenstand sowie um das Tragprofil geführt und anschliessend das freie Ende des Spannbandes in den Verspannmechanismus eingeführt. Mittels Betätigung des Verspannmechanismus wird der Gegenstand am Tragprofil fixiert beziehungsweise festgezurrt.

Nachteilig an dieser bekannten Lösung ist, dass das Spannband in den Verspannmechanismus eingefädelt werden muss. Weiter muss die überschüssige Spannbandlänge verschlauft werden. Nach dem Gebrauch beziehungsweise zur Lagerung muss das Spannband aufgerollt werden.

Aus der US 2001/0043845 A1 ist ein Ladungssicherungssystem zur Anordnung an einer Fahrzeug-Aufbaukonstruktion aus Tragprofilen bekannt, welche als Spannmittel ein Spannband aufweist. Das Spannband ist mit einem Ende an einer Winde als Verspannmechanismus festgelegt, welche an einem der Tragprofile befestigt ist. An dem anderen, freien Ende des Spannbandes ist ein Hakenelement vorgesehen, das in Öffnungen am Tragprofil einhängbar ist. Der zu fixierende Gegenstand wird auf das Tragprofil aufgelegt und anschliessend das mit dem Haken versehene, über den Gegenstand geführte Ende des Spannbandes über den Haken an einem der Tragprofile festgelegt. Mittels Betätigung des Verspannmechanismus wird der Gegenstand am Tragprofil fixiert beziehungsweise festgezurrt. Wird das Spannband nicht mehr benötigt, wird dieses auf der Winde aufgerollt.

Nachteilig an dieser bekannten Lösung ist, dass dieses Ladungssicherungssystem aufwändig im Aufbau und an eine bestimmte Fahrzeug-Aufbaukonstruktion gebunden ist. Um den Gegenstand mit diesem Ladungssicherungssystem zu fixieren, muss zudem der Gegenstand auf dem Tragprofil in einer vorgegebenen Position angeordnet sein.

Aus der DE 91 06 876 U1 ist ein Ladungssicherungssystem zur Fixierung eines Gegenstandes an einem Tragprofil mit Sockelelementen und mit einem Spannmittel bekannt, das über Haken an den Sockelelementen anordnenbar ist. Über Verspannmechanismen in den Bereichen der freien Enden des Spannmittels wird der Gegenstand am Tragprofil fixiert beziehungsweise festgezurrt. Jedes Sockelelement weist einen Basisabschnitt mit einer ersten Seitenkante und mit einer zweiten Seitenkante, welche einander gegenüberliegend in einem Abstand zueinander beabstandet sind, sowie mit einer Anlageseite auf, welche im montierten Zustand des Sockelelementes zumindest bereichsweise mit einem Abschnitt des Tragprofils in Anlage kommt. Von den Seitenkanten des Basisabschnitts ragt jeweils ein Schenkel ab, so dass das Sockelelement im Querschnitt eine U-förmige Ausgestaltung und somit einen Aufnahmeraum zur Aufnahme eines Abschnitts des Tragprofils aufweist. Im Endbereich der Schenkel ist ein parallel zum Basisabschnitt verlaufender Bolzen vorgesehen, an welchem die Haken des Spannmittels einhängbar sind.

Nachteilig an dieser bekannten Lösung ist, dass die Sockelelemente ständig an dem Tragprofil angeordnet sein müssen und somit im losen Zustand des Spannmittels zu unerwünschten Geräuschen führen. Alternativ müssen die Sockelelemente jeweils mühsam von dem Tragprofil entfernt und wieder auf das Tragprofil aufgefädelt werden. Da bei einem Fahrzeug-Dachträger die Montage und Demontage der Tragprofile aufwändig ist, erschwert insbesondere das Auffädeln der Sockelelemente den Fixiervorgang massgeblich. Als separate Teile des Ladungssicherungssystems sind die Sockelelemente zudem leicht verlierbar.

Aufgabe der vorliegenden Erfindung ist es somit, ein Sockelelement beziehungsweise ein Ladungssicherungssystem zu schaffen, welches die vorgenannten Nachteile nicht aufweist und das insbesondere eine schnelle, flexible Einsatzbereitschaft sowie einfache und sichere Fixierung von Gegenständen an einem Tragprofil ermöglicht.

Die Aufgabe für ein Sockelelement wird durch die Merkmale des unabhängigen Anspruchs 1 gelöst. Vorteilhafte Weiterbildungen sind in den Figuren und in den von dem Anspruch 1 abhängigen Patentansprüchen dargelegt.

Gemäss der Erfindung sind an dem Sockelelement ein erster Halteabschnitt und ein zweiter Halteabschnitt vom Basisabschnitt ausgehend vorgesehen, wobei zwischen dem ersten Halteabschnitt und der Anlageseite des Basisabschnitts ein erster Aufnahmeraumabschnitt sowie eine erste Montageöffnung zur Anordnung des Sockelelementes an dem Tragprofil ausgebildet sind und wobei zwischen dem zweiten Halteabschnitt und der Anlageseite des Basisabschnitts ein zweiter Aufnahmeraumabschnitt sowie eine zweite Montageöffnung zur Anordnung des Sockelelementes an dem Tragprofil ausgebildet sind. Die erste Montageöffnung und die zweite Montageöffnung sind gegensinnig zueinander ausgerichtet. Der erste Halteabschnitt und der zweite Halteabschnitt sind in Richtung einer der Seitenkanten des Basisabschnitts in einem Abstand zueinander beabstandet.

Ein derartiges Sockelelement ist einfach durch Verschwenken auf dem Tragprofil an einer beliebigen Position des Tragprofils positionierbar. Dazu wird das Sockelelement mit seiner Anlageseite voran in einem Winkel zur Längserstreckung des Tragprofils auf dasselbe aufgesetzt, so dass das Tragprofil zwischen dem ersten Halteabschnitt und dem zweiten Halteabschnitt zu liegen kommt. Anschliessend wird das Sockelelement um eine Achse, welche senkrecht zu der von dem Basisabschnitt aufgespannten Ebene steht, verschwenkt, bis die Halteabschnitte das Tragprofil zumindest bereichsweise umgreifen. Dieses Sockelelement zeichnet sich durch seine Bedienerfreundlichkeit und die Flexibilität in der Anordnung entlang des Tragprofils aus.

An einer Halteseite des Basisabschnitts des Sockelelementes, welche der Anlageseite gegenüberliegt, wird beispielsweise über einen Festlegeabschnitt das Spannmittel festgelegt. Alternativ ist das Spannmittel direkt oder indirekt über einen Verspannmechanismus an der Halteseite des Basisabschnitts des Sockelelementes angeordnet. Wird nun das Spannmittel verspannt, kommt das Sockelelement mit dem Tragprofil zumindest abschnittweise in Anlage und wird gleichzeitig relativ zum Tragprofil gesichert. Die Grösse der Anlagefläche wird im Wesentlichen durch die Position des Angriffspunktes des Spannmittels an dem Sockelelement bestimmt. Bei einem aussermittigen Angriffspunkt verkippt das Sockelelement über einen durch die konstruktive Ausgestaltung des Sockelelementes und den Aussenabmessungen des Tragprofils möglichen Bereich.

Das Spannmittel umfasst beispielsweise einen, vorteilhaft textilen, Spanngurt oder Zurrgurt.

Vorzugsweise entspricht der Abstand der beiden Halteabschnitte in Richtung einer der Seitenkanten des Basisabschnitts dem 0.5-fachen bis 2.0-fachen des Abstandes der beiden Seitenkanten des Basisabschnitts zueinander, womit ein ausreichender Freiraum zur Anordnung des Sockelelementes am Tragprofil geschaffen wird. Desto grösser der Abstand der beiden Halteabschnitte zueinander gewählt wird, desto grösser ist beispielsweise der Winkelbereich, in welchem das Sockelelement zur Montage desselben am Tragprofil angeordnet werden kann. Jedoch vergrössert sich bei einem grossen Abstand zwischen den beiden Halteabschnitten die gesamte Baulänge des Sockelelementes. Eine kurze Baulänge des Sockelelementes wird jedoch hier als besonders vorteilhaft angesehen, da dann das Sockelelement z. B. näher bei einer Stütze des Tragprofils anordnenbar ist und zu fixierende Gegenstände flexibler entlang des Tragprofils positionierbar sind. Als besonders vorteilhaft hat sich daher ein Abstand der beiden Halteabschnitte in Richtung einer der Seitenkanten des Basisabschnitts zueinander erwiesen, der dem 0.7-fachen bis 1.1-fachen des Abstandes der beiden Seitenkanten des Basisabschnitts zueinander entspricht.

Bevorzugt weist der erste Halteabschnitt einen sich von der Anlageseite des Basisabschnitts erstreckenden, ersten Distanzabschnitt sowie einen sich in Richtung der zweiten Seitenkante des Basisabschnitts ausgerichteten, jedoch zu der Anlageseite des Basisabschnitts beabstandeten ersten Hintergreifabschnitt auf. Der zweite Halteabschnitt weist einen sich von der Anlageseite des Basisabschnitts erstreckenden, zweiten Distanzabschnitt sowie einen sich in Richtung der ersten Seitenkante des Basisabschnitts ausgerichteten, jedoch zu der Anlageseite des Basisabschnitts beabstandeten zweiten Hintergreifabschnitt auf. Insbesondere die Länge des jeweiligen Distanzabschnitts von der Anlageseite bis zum jeweiligen Hintergreifabschnitt wird vorteilhaft entsprechend der Dimension des Tragprofils gewählt. Der jeweilige Distanzabschnitt bildet zudem einen Anschlag beim Verschwenken des Sockelelementes auf dem Tragprofil.

Alternativ zu einer einteiligen Ausführungsform des Sockelelementes mit einer festen Anordnung der Halteabschnitte an dem Basisabschnitt des Sockelelementes können die Halteabschnitte auch einstellbar ausgebildet sein. Einstellbare Halteabschnitte ermöglichen eine sichere und einfache Anordnung eines Typs von Sockelelement an Tragprofilen mit unterschiedlicher Ausgestaltung, insbesondere mit verschiedenen Tragprofilhöhen. Beispielsweise kann in einer solchen Ausführungsform der Distanzabschnitt des Halteabschnitts relativ zum Basisabschnitt beweglich angeordnet sein. Über eine geeignete Feststelleinrichtung wird der Distanzabschnitt in der gewünschten Position am Basisabschnitt fixiert. Alternativ oder ergänzend dazu kann der Hintergreifabschnitt relativ zum Distanzabschnitt beweglich ausgebildet und über eine Feststelleinrichtung in der gewünschten Position an diesem fixierbar sein.

Der erste Halteabschnitt und/oder der zweite Halteabschnitt bilden mit dem Basisabschnitt jeweils einen U-förmigen Querschnitt aus, wobei der offene Bereich der U-Form jeweils die Montageöffnung des entsprechenden Halteabschnitts bildet, Damit wird bei einer einfachen Herstellung des Sockelelementes ein sicheres Umgreifen des Tragprofils von dem entsprechenden Halteabschnitt gewährleistet. Besonders vorteilhaft sind beide Halteabschnitte eines Sockelelementes U-förmig und weiter vorteilhaft gleichartig ausgestaltet. Der freie Schenkel und/oder der Verbindungsabschnitt des U-förmigen Querschnitts können, eventuell nur bereichsweise, gerade oder bogenförmig verlaufen.

Vorzugsweise weisen der erste Hintergreifabschnitt und der zweite Hintergreifabschnitt einander zugewandte, in einem Abstand zueinander angeordnete, innere Hintergreifabschnittseiten auf, welche mit einer der Seitenkanten einen Winkel von weniger als 90° einschliessen, womit das Sockelelement in einer entsprechenden Winkelstellung zur Längserstreckung des Tragprofils an diesem anordnenbar ist. Das Sockelelement wird im entsprechenden kleinen Winkel auf das Tragprofil aufgesetzt und muss für eine das Tragprofil hintergreifende Position lediglich um diesen kleinen Winkelbereich verdreht werden. Dies vereinfacht die Montage des Sockelelementes wesentlich. Desto kleiner der eingeschlossene Winkel gewählt wird, desto kleiner ist der zur Montage zu verdrehende Winkelbereich. Die Untergrenze des eingeschlossenen Winkels wird im Wesentlichen durch das Erfordernis einer ausreichenden Hintergreifung des Tragprofils von dem Sockelelement und der gewünschten beziehungsweise maximal möglichen Längserstreckung des Sockelelementes bestimmt. Vorteilhaft hat sich ein Bereich des eingeschlossenen Winkels von 50° bis 75°, insbesondere von 60° bis 70°, erwiesen.

Vorteilhaft verlaufen die einander zugewandten, in einem Abstand zueinander angeordneten inneren Hintergreifabschnittseiten des ersten Hintergreifabschnitts und des zweiten Hintergreifabschnitts parallel zueinander, was ein einfaches Handling des Sockelelementes und ein vorteilhaftes Hintergreifen des Tragprofils im montierten Zustand des Sockelelementes ermöglicht.

Bevorzugt entspricht der Abstand der beiden inneren Hintergreifabschnittseiten zueinander zumindest dem 0.9-fachen bis 1.3-fachen des Abstandes der beiden Seitenkanten des Basisabschnitts zueinander, womit ein ausreichender Freiraum zur Anordnung des Sockelelementes am Tragprofil geschaffen wird. Desto grösser der Abstand der beiden Hintergreifabschnittseiten zueinander gewählt wird, desto grösser ist beispielsweise der Winkelbereich, in welchem das Sockelelement zur Montage desselben am Tragprofil angeordnet werden kann. Als besonders vorteilhaft hat sich ein Abstand der beiden inneren Hintergreifabschnittseiten zueinander erwiesen, der dem 0.95-fachen bis 1.1-fachen des Abstandes der beiden Seitenkanten des Basisabschnitts zueinander entspricht.

Vorzugsweise weist der Basisabschnitt eine erste Endkante und eine der ersten Endkante gegenüberliegende zweite Endkante auf, wobei die Endkanten quer zu den Seitenkanten verlaufen und zumindest eine der Endkanten des Basisabschnitts in Richtung einer der Anlageseite des Basisabschnitts gegenüberliegende Halteseite gekröpft ist. Beim Verspannen des an dem Sockelelementes angeordneten Spannmittels ermöglicht die gekröpfte Endkante ein einfaches Verkippen des Sockelelementes am Tragprofil um diese Endkante und somit eine vorteilhafte Fixierung des Sockelelementes in Richtung der Längserstreckung des Tragprofils über die erzeugte Klemmung. Vorteilhaft ist die gekröpfte Endkante mit einer Profilierung versehen, womit der Kraftschluss des Sockelelementes mit dem Tragprofil verbessert wird.

Weiter vorteilhaft sind beide Endkante des Basisabschnitts des Sockelelementes in Richtung einer der Anlageseite des Basisabschnitts gegenüberliegende Halteseite gekröpft, damit beide Endkanten je nach Verspannrichtung des Spannmittels mit dem Tragprofil vorteilhaft flächig in Anlage bringbar sind. Ein solches Sockelelement ist noch flexibler einsetzbar.

Bevorzugt ist eine äussere Hintergreifabschnittseite zumindest eines der Hintergreifabschnitte der Halteabschnitte in eine Richtung abgewandt zu der Auflageseite des Basisabschnitts gekröpft. Beim Verspannen des an dem Sockelelementes angeordneten Spannmittels ermöglicht die gekröpfte Seite des Hintergreifabschnitts eine bereichsweise flächige Anlage des Sockelelementes am Tragprofil und somit eine vorteilhafte Fixierung des Sockelelementes in Richtung der Längserstreckung des Tragprofils über die erzeugte Klemmung. Vorteilhaft ist die gekröpfte Seite des Hintergreifabschnitts mit einer Profilierung versehen, womit der Kraftschluss des Sockelelementes mit dem Tragprofil verbessert wird.

Weiter vorteilhaft sind beide äusseren, d. h. einander abgewandten Hintergreifabschnittseiten der Hintergreifabschnitte in Richtung abgewandt zu der Anlageseite des Basisabschnitts gekröpft, damit sind diese Hintergreifabschnittseiten der Hintergreifabschnitte je nach Verspannrichtung des Spannmittels mit dem Tragprofil vorteilhaft flächig in Anlage bringbar. Ein solches Sockelelement ist sehr flexibel einsetzbar.

Besonders vorteilhaft sind eine Endkante des Basisabschnitts des Sockelelementes und die äussere Hintergreifabschnittseite des im Bereich der anderen Endkante vorgesehenen Hintergreifabschnitts gekröpft, so dass diese auf einer Diagonale liegen und dadurch an beiden Endabschnitten des Sockelelementes zwei vorteilhafte flächige Anlagen des Sockelelementes gegeben sind.

Noch vorteilhafter sind beide Endkanten des Basisabschnitts wie auch die beiden äusseren Hintergreifabschnittseiten der Hintergreifabschnitte eines Sockelelementes jeweils gegeneinander abgewandt gekröpft, womit dieses Sockelelement bezüglich der Verspannrichtung eine optimale Anlage desselben am Tragprofil gewährleistet.

Vorzugsweise verlaufen der Basisabschnitt in einer ersten Ebene und der erste Hintergreifabschnitt des ersten Halteabschnitts in zumindest einer zweiten Ebene, welche im Wesentlichen parallel zu der ersten Ebene ausgerichtet ist. Alternativ oder ebenfalls verlaufen der Basisabschnitt in einer ersten Ebene und der zweite Hintergreifabschnitt des zweiten Halteabschnitts in zumindest einer zweiten Ebene, welche im Wesentlichen parallel zu der ersten Ebene ausgerichtet ist. Besonders vorteilhaft liegen der erste Hintergreifabschnitt und der zweite Hintergreifabschnitt in einer gemeinsamen beziehungsweise in der gleichen Ebene. Eine solche Ausführung des Sockelelementes ist insbesondere zur Anordnung desselben an einem Tragprofil mit einer im Querschnitt rechteckigen Ausgestaltung vorteilhaft, da im verspannten Zustand des am Sockelelement vorgesehenen Spannmittels eine Anlage des Sockelelementes an dem Tragprofil über einen grossen Flächenbereich gegeben ist.

Bevorzugt ist ein Sicherungselement zur Sicherung des Sockelelementes an dem Tragprofil vorgesehen, wobei das Sicherungselement aus einer Montagestellung, in welcher das Sockelelement am Tragprofil anordnenbar ist, in eine Sicherungsstellung überführbar ist, in welcher das Sockelelement am Tragprofil gesichert ist. In der Sicherungsstellung wird sichergestellt, dass das Sockelelement nicht unbeabsichtigt von dem Tragprofil lösbar ist.

Vorteilhaft weist das Sicherungselement einen Basisabschnitt mit zwei Endkanten und zwei von dem Basisabschnitt des Sicherungselementes in die gleiche Richtung abragende, in der Sicherungsstellung des Sicherungselementes den Hintergreifabschnitten zugewandte Seitenschenkel auf, welche quer zu zumindest einer der Endkanten des Basisabschnitts des Sicherungselementes verlaufen. Ein solches Sicherungselement umgreift in der Sicherungsstellung einen Teil, vorteilhaft des Tragprofil und/oder des Sockelelement, zumindest bereichsweise.

Vorzugsweise ist das Sicherungselement verschwenkbar, was eine einfache Betätigung beziehungsweise Überführung desselben in die unterschiedlichen Stellungen desselben ermöglicht. Vorteilhaft ist benachbart zum ersten Ende des Basisabschnitts des Sicherungselementes eine Schwenkachse für das Sicherungselement vorgesehen, an welcher das Sicherungselement vorteilhaft unverlierbar angeordnet ist. Weiter vorteilhaft ist die Schwenkachse an der der Auflageseite des Basisabschnitts des Sockelelementes abgewandte Halteseite angeordnet, wobei die Schwenkachse von einer Seitenkante des Basisabschnitts in Richtung der anderen Seitenkante verläuft, was eine einfache Ausbildung des Sicherungsmechanismus sicherstellt. Eine einfache Ausgestaltung eines derartigen Sockelelementes ergibt sich, wenn die Schwenkachse benachbart zu einer der Endkanten des Basisabschnitts des Sockelelementes angeordnet ist.

Bevorzugt ist zumindest ein erster Betätigungsabschnitt zur Entsicherung des Sicherungselementes an demselben vorgesehen, was eine einfache Überführung des Sicherungselementes aus der Sicherungsstellung in die Montagestellung ermöglicht. Für eine einfache Betätigung ragt der Betätigungsabschnitt vorteilhaft von einem der Seitenschenkel des Sicherungselementes ab.

Vorteilhaft ist zumindest ein zweiter Betätigungsabschnitt zur Entsicherung des Sicherungselementes an demselben vorgesehen, was die Bedienbarkeit des Sicherungselementes zusätzlich vereinfacht. Der zumindest eine zweite Betätigungsabschnitt wird vorteilhaft beabstandet zum ersten Betätigungsabschnitt an dem Sicherungselement vorgesehen. Besonders vorteilhaft ragt der zumindest eine zweite Betätigungsabschnitt von dem anderen Seitenschenkel des Sicherungselementes ab.

Vorzugsweise ist eine Spielausgleichseinrichtung zum Ausgleich des Spiels zwischen dem Sockelelement und dem Tragprofil vorgesehen, womit ein am Tragprofil angeordnetes Sockelelement auch im unverspannten Zustand des Spannmittels nicht klappern kann. Für eine einfache konstruktive Ausgestaltung des Sockelelementes sowie leichte Betätigung der Spielausgleichseinrichtung ist diese vorteilhaft an einem Distanzabschnitt des Sockelelementes vorgesehen. Die Spielausgleichseinrichtung umfasst beispielsweise eine Schraube, welche das Sockelelement mit dem Tragprofil verspannen kann. Mittels einer solchen Schraube wäre das Sockelelement unter Umständen auch an dem Tragprofil fixierbar.

Alternativ oder ergänzend dazu wird im Aufnahmeraum des Sockelelementes ein Spielausgleichselement vorgesehen, welches den Abstand zwischen dem Sockelelement und der Oberfläche des Tragprofils reduziert. Ein Spielausgleichselement wird beispielsweise werkseitig oder bedarfsabhängig vor Ort z. B. über eine Klebung oder eine lösbare Verbindung, wie eine Klettverbindung, an dem Sockelelement angeordnet.

Alternativ oder ergänzend zu der Spielausgleichseinrichtung ist eine Fixiereinrichtung zum Fixieren des Sockelelementes relativ zum Tragprofil vorgesehen, womit eine Verschiebung des Sockelelementes entlang des Tragprofils auch im unverspannten Zustand des Spannmittels verhindert ist. Für eine einfache konstruktive Ausgestaltung des Sockelelementes sowie leichte Betätigung der Fixiereinrichtung ist diese vorteilhaft an dem Basisabschnitt oder an einem der Halteabschnitte des Sockelelementes vorgesehen. Die Fixiereinrichtung umfasst beispielsweise eine Schraube, welche das Sockelelement mit dem Tragprofil verspannen kann.

Die Aufgabe für ein Ladungssicherungssystem wird durch die Merkmale des unabhängigen Anspruchs 13 gelöst. Vorteilhafte Weiterbildungen sind in den Figuren und in den von dem Anspruch 13 abhängigen Patentansprüchen dargelegt.

Das erfindungsgemässe Ladungssicherungssystem zur Fixierung zumindest eines Gegenstandes an einem Tragprofil, insbesondere an einem Fahrzeug-Dachträger, umfasst ein Sockelelement zur Anordnung an dem Tragprofil, das zumindest einzelne der vorgenannten Merkmale aufweist, und ein Spannmittel, das am Sockelelement angeordnet oder anordnenbar ist.

Ein solches Ladungssicherungssystem ist schnell und flexibel einsetzbar. Zudem ermöglicht dieses eine einfache und sichere Fixierung von Gegenständen auf dem Tragprofil.

Vorzugsweise umfasst das Spannmittel einen Verspannmechanismus zum Verspannen beispielsweise eines Spanngurtes. Besonders vorteilhaft ist die Verspanneinrichtung als Spannratsche ausgebildet, welche einfach bedienbar ist. Bevorzugt ist ein Hakenelement zum Festlegen des freien Endes des Spannmittels am Tragprofil vorgesehen, was eine einfache Anordnung des freien Endes des Spannmittels z. B. auf der Seite des zu fixierenden Gegenstandes, welche der Seite des Gegenstandes gegenüberliegt, an welcher das Sockelelement beziehungsweise das Ladungssicherungssystem vorgesehen ist.

Vorteilhaft weist das Hakenelement zwei gegensinnig ausgerichtete und zueinander beabstandete Hakenenden zur Ausbildung eines Aufnahmeraums für das Tragprofil zwischen sich auf, womit das Hakenelement einfach an dem Tragprofil anordnenbar ist.

Weiter vorteilhaft ist an zumindest einem Abschnitt des Hakenelementes, welcher im verspannten Zustand des Spannmittels mit dem Tragprofil in Anlage kommt, eine Profilierung vorgesehen, womit das Hakenelement in diesem Zustand einen verbesserten Kraftschluss mit dem Tragprofil aufweist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine Ausführungsform eines erfindungsgemässen Sockelelementes in einer perspektivischen Ansicht,
- Fig. 2: das Sockelelement gemäss Figur 1 in einer Draufsicht von unten;
- Fig. 3: das Sockelelement gemäss Figur 1 in einer Ansicht von vorne;
- Fig. 4: eine Variante des Sockelelementes gemäss Figur 3 mit Einlageelementen in einer Ansicht von vorne;
- Figs. 5 - 7: einen Montagevorgang des Sockelelementes gemäss Figur 1 an einem Tragprofil in drei Einzelschritten jeweils in einer perspektivischen Ansicht;
- Fig. 8: eine Ausführungsform eines erfindungsgemässen Ladungssicherungssystems in einer Seitenansicht mit offener Spannratsche,
- Fig. 9: das Ladungssicherungssystem gemäss Figur 8 in einer Seitenansicht mit geschlossener Spannratsche,
- Fig. 10: ein Hakenelement des erfindungsgemässen Ladungssicherungssystems in einer Draufsicht,
- Fig. 11: das Hakenelement gemäss Figur 10 in einer Seitenansicht;
- Fig. 12: einen Montagevorgang des Hakenelementes gemäss Figur 10 an einem Tragprofil in einer perspektivischen Ansicht; und
- Figs. 13 -14: das Hakenelement gemäss Figur 10 im verspannten Zustand des Ladungssicherungssystems in zwei unterschiedlichen perspektivischen Ansichten.

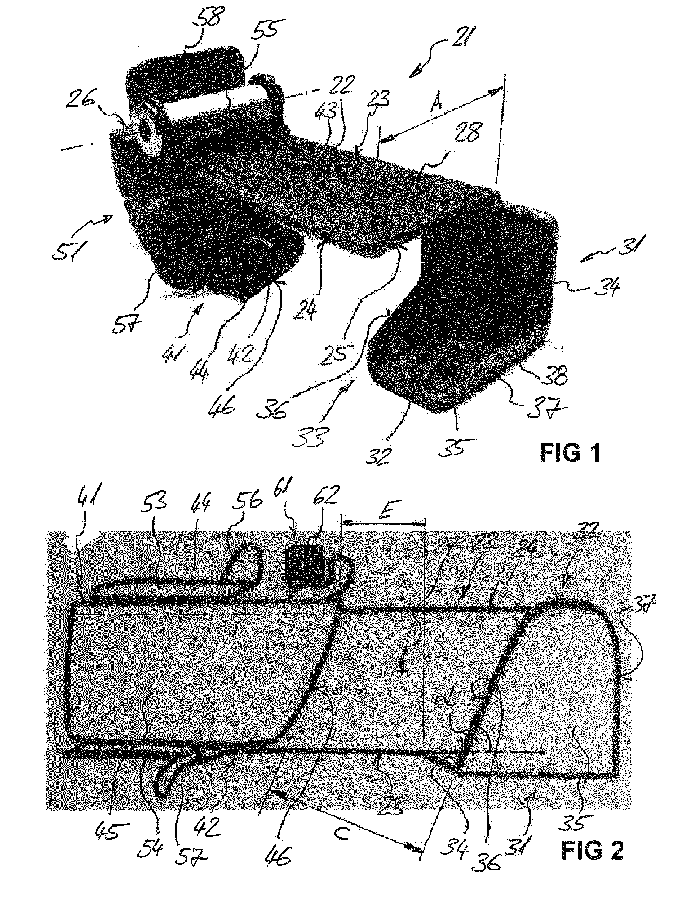

Das in den Figuren 1 bis 3 gezeigte Sockelelement 21 wird an einem Tragprofil 16 angeordnet, insbesondere an einem Fahrzeug-Dachträger. Wie nachfolgend noch detailliert ausgeführt wird, bildet dieses Sockelelement 21 ein Teil eines Ladungssicherungssystems 71.

Das Sockelelement 21 weist einen vorteilhaft rechteckigen Basisabschnitt 22 mit einer ersten Seitenkante 23 und mit einer zweiten Seitenkante 24 auf, welche einander gegenüberliegend in einem Abstand A zueinander beabstandet sind. Quer zu den Seitenkanten 23 und 24, hier in einer Richtung senkrecht zu den Seitenkanten 23 und 24, wird der Basisabschnitt 22 von einer ersten Endkante 25 und einer der ersten Endkante 25 gegenüberliegenden zweiten Endkante 26 begrenzt.

Des Weiteren weist der Basisabschnitt 22 eine Anlageseite 27, welche im montierten Zustand des Sockelelementes 21 zumindest bereichsweise mit einem Abschnitt des Tragprofils 16 in Anlage kommt, und eine der Anlageseite 27 gegenüberliegende Halteseite 28 auf, an welcher das Spannmittel 19 direkt oder indirekt festlegbar ist.

Die zweite Endkante 26 ist in Richtung der Halteseite 28 des Basisabschnitts 22 gekröpft und somit im angeordneten Zustand des Sockelelementes 21 vom Tragprofil 16 weg abgekantet beziehungsweise abgebogen. Vorteilhaft ist die zweite Endkante 26 zusätzlich oder alternativ mit einer Profilierung z. B. in Form einer Riffelung versehen.

Von dem Basisabschnitt 22 abragend sind an diesem ein erster Halteabschnitt 31 und ein zweiter Halteabschnitt 41 vorgesehen. Die Halteabschnitte 31 und 41 sind vorteilhaft einstückig mit dem Basisabschnitt 22 ausgebildet oder alternativ lösbar an diesem befestigt. Zwischen dem ersten Halteabschnitt 31 und der Anlageseite 27 des Basisabschnitts 22 liegt ein erster Aufnahmeraumabschnitt 32 sowie eine erste Montageöffnung 33 zur Anordnung des Sockelelementes 21 an dem Tragprofil 16. Zwischen dem zweiten Halteabschnitt 41 und der Anlageseite 27 liegt ein zweiter Aufnahmeraumabschnitt 42 sowie eine zweite Montageöffnung 43 zur Anordnung des Sockelelementes 21 an dem Tragprofil 16. Der erste Aufnahmeraumabschnitt 32 wird durch den Basisabschnitt 22 und den ersten Halteabschnitt 31 bereichsweise umfänglich begrenzt. Der zweite Aufnahmeraumabschnitt 42 wird durch den Basisabschnitt 22 und den zweiten Halteabschnitt 41 bereichsweise umfänglich begrenzt. Der Aufnahmeraumabschnitt 32 und der zweite Aufnahmeraumabschnitt 42 bilden einen Aufnahmeraum des Sockelelementes 21 zur Aufnahme eines Abschnitts des Tragprofils 16 aus.

Die erste Montageöffnung 32 und die zweite Montageöffnung 42 sind gegensinnig zueinander ausgerichtet. Im montierten Zustand des Sockelelementes 21 umfassen der Basisabschnitt 22 und die Halteabschnitte 31 und 41 das Tragprofil 16 zumindest bereichsweise dreiseitig.

Der erste Halteabschnitt 31 und der zweite Halteabschnitt 41 sind in Richtung einer der Seitenkanten des Basisabschnitts in einem Abstand E zueinander beabstandet. Der Abstand E der beiden Halteabschnitte 31 und 41 in Richtung einer der Seitenkanten 24 des Basisabschnitts entspricht in diesem Beispiel etwa dem 0.75-fachen des Abstandes A der beiden Seitenkanten 23 und 24 des Basisabschnitts 22 zueinander.

Der erste Halteabschnitt 31 weist einen sich von der Anlageseite 27 erstreckenden, ersten Distanzabschnitt 34 und einen sich in Richtung der zweiten Seitenkante 24 des Basisabschnitts 22 ausgerichteten, jedoch zu der Anlageseite 27 des Basisabschnitts 22 beabstandeten ersten Hintergreifabschnitt 35 auf. Der zweite Halteabschnitt 41 weist einen sich von der Anlageseite 27 erstreckenden, zweiten Distanzabschnitt 44 und einen sich in Richtung der ersten Seitenkante 23 des Basisabschnitts 22 ausgerichteten, jedoch zu der Anlageseite 27 des Basisabschnitts 22 beabstandeten zweiten Hintergreifabschnitt 45 auf.

Der Basisabschnitt 22 verläuft in einer ersten Ebene und der erste Hintergreifabschnitt 35 des ersten Halteabschnitts 31 sowie der zweite Hintergreifabschnitt 45 des zweiten Halteabschnitts 41 verlaufen in einer zweiten Ebene, welche im Wesentlichen parallel zu der ersten Ebene ausgerichtet ist. Der erste Hintergreifabschnitt 31 und der zweite Hintergreifabschnitt 41 liegen somit in einer gemeinsamen beziehungsweise in der gleichen Ebene. Der erste Halteabschnitt 31 und der zweite Halteabschnitt 36 bilden jeweils mit dem Basisabschnitt 22 einen U-förmigen Querschnitt aus.

Der erste Hintergreifabschnitt 35 und der zweite Hintergreifabschnitt 45 weisen einander zugewandte, in einem Abstand C zueinander angeordnete, innere Hintergreifabschnittseiten 36 bzw. 46 auf. Die Hintergreifabschnittseiten 36 bzw. 46 schliessen mit einer der Seitenkanten 23 des Basisabschnitts 22 einen Winkel α von weniger als 90°, hier von etwa einen Winkel α von 65°, ein und verlaufen zumindest bereichsweise parallel zueinander. Der Abstand C der beiden Hintergreifabschnittseiten 36 und 46 entspricht dem 0.9-fachen bis 1.3-fachen, vorteilhaft dem 0.95-fachen bis 1.1-fachen, des Abstandes A der beiden Seitenkanten 23 und 24 des Basisabschnitts 22 zueinander.

Eine äussere, der inneren Hintergreifabschnittseite 36 gegenüberliegende Hintergreifabschnittseite 37 des ersten Hintergreifabschnitts 35 des ersten Halteabschnitts 31 ist in eine Richtung abgewandt zu der Auflageseite 27 des Basisabschnitts 22 und somit vom Tragprofil 16 weg gekröpft. Vorteilhaft ist die äussere Hintergreifabschnittseite 37 des ersten Hintergreifabschnitts 35 mit einer Profilierung 38 versehen.

An dem zweiten Distanzabschnitt 44 des zweiten Halteabschnitts 41 ist eine Spielausgleichseinrichtung 61 zum Ausgleich des Spiels zwischen dem Sockelelement 21 und dem Tragprofil 16 vorgesehen. Die Spielausgleichseinrichtung 61 umfasst eine Stellschraube 62, welche in einer mit einem Gewinde versehenen und im zweiten Distanzabschnitt 44 angeordneten Bohrung vorgesehen ist. Mittels der Stellschraube 62 kann das Sockelelement 21 gegebenenfalls an dem Tragprofil 16 fixiert werden, so dass das Sockelelement 21 nicht mehr relativ zu dem Tragprofil 16 und entlang diesem verschiebbar ist. In diesem Fall bildet die Spielausgleichseinrichtung 61 gleichzeitig eine Fixiereinrichtung für das Sockelelement 21 aus.

Weiter umfasst das Sockelelement 21 ein verschwenkbares Sicherungselement 51 zur Sicherung des Sockelelementes 21 an dem Tragprofil 16. Das Sicherungselement 51 ist aus einer Montagestellung, in welcher das Sockelelement 21 am Tragprofil 16 anordnenbar ist, in eine Sicherungsstellung überführbar, in welcher das Sockelelement 21 am Tragprofil 16 gesichert.

Das Sicherungselement 51 ist im Querschnitt U-förmig ausgebildet und weist einen Basisabschnitt 52 mit zwei Endkanten und zwei von dem Basisabschnitt 52 des Sicherungselementes 51 in die gleiche Richtung abragende und in der Sicherungsstellung des Sicherungselementes 51 dem Hintergreifabschnitt 45 des zweiten Hintergreifabschnitts 41 zugewandte Seitenschenkel 53 und 54 auf.

Benachbart zur zweiten Endkante 26 des Basisabschnitts 22 des Sockelelementes 21 ist an dessen Halteseite 28 eine einen Bolzen umfassende Schwenkachse 55 vorgesehen. Die Schwenkachse 55 verläuft von einer Seitenkante 23 des Basisabschnitts 22 in Richtung dessen anderen Seitenkante 24. Das Sicherungselement 51 ist mit einer der Endkanten des Basisabschnitts 52 des Sicherungselementes 51 an der Schwenkachse 55 schwenkbar angeordnet.

Von dem Seitenschenkel 53 des Sicherungselementes 51 ragt ein erster Betätigungsabschnitt 56 ab. Von dem anderen Seitenschenkel 54 des Sicherungselementes 51 ragt ein zweiter Betätigungsabschnitt 57 ab. Die Betätigungsabschnitte 56 und 57 dienen zur Entsicherung des Sicherungselementes 51 um ein an einem Tragprofil 16 angeordnetes Sockelelement 21 von diesem wieder einfach entfernen zu können. Der erste Betätigungsabschnitt 56 wie auch der zweite Betätigungsabschnitt 57 weisen jeweils einen gebogenen Abschnitt auf, wobei deren Biegungsverlauf gegensinnig ist. Mittels der unterschiedlich ausgebildeten Betätigungsabschnitte 56 und 57 kann das Sicherungselement 51 einfach von oben wie auch von unten von der Sicherungsstellung in eine Montagestellung überführt werden.

Von dem Basisabschnitt 52 des Sicherungselementes 51 ragt entgegengesetzt zu der Erstreckungsrichtung der Seitenschenkel 53 und 54 eine Blockierabschnitt 58 ab. Der Blockierabschnitt 58 verläuft quer zu den von den Seitenschenkeln 53 und 54 aufgespannten Ebenen beziehungsweise parallel zur Schwenkachse 55.

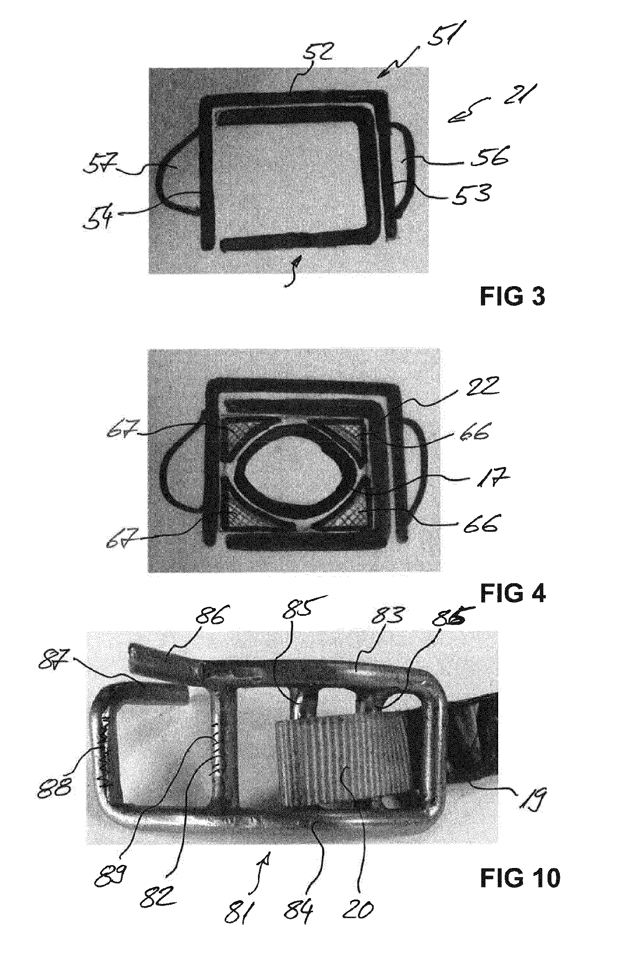

Figur 4 zeigt eine Variante, bei der anstelle der zuvor beschriebenen Spielausgleichseinrichtung 61 zum Ausgleich des Spiels zwischen dem Sockelelement 21 und einem im Querschnitt ovalen Tragprofil 17 mehrere, vorteilhaft komprimierbare Einlageelemente 66 und 67 vorgesehen sind. Die Einlageelemente 66 und 67 sind vorteilhaft an den Distanzabschnitten 34 bzw. 44 der Halteabschnitte 31 bzw. 41 festgelegt.

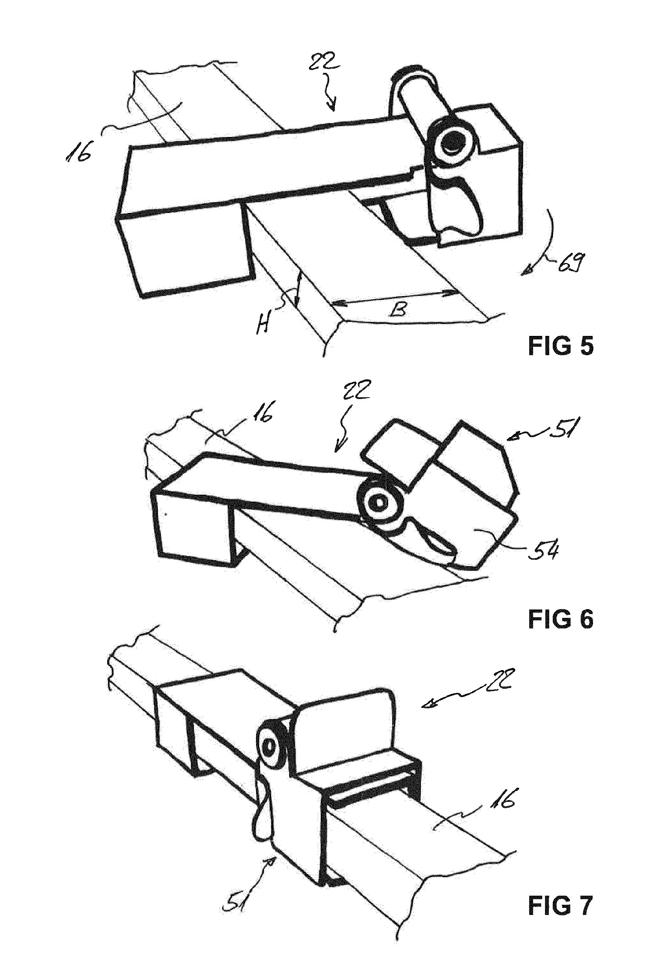

Nachfolgend wird mit Bezug auf die Figuren 5 bis 7 der Montagevorgang des Sockelelementes 21 an einem Tragprofil 16 beschrieben. Das Sockelelement 21 wird in einem Winkel zur Längserstreckung des Tragprofils 16 angeordnet. Dieser Winkel wird durch die Ausgestaltung beziehungsweise durch den Abstand der inneren Hintergreifabschnittseiten 36 und 46 der Halteabschnitte 31 und 41 zueinander bestimmt. Wie insbesondere aus der Figur 5 ersichtlich, ist der Abstand C der inneren Hintergreifabschnittseiten 36 und 46 der Halteabschnitte 31 und 41 zueinander etwas grösser als die Breite B des Tragprofils 16 gewählt. Der Abstand der Aufnahmeraumabschnitte 32 und 42 zwischen den Hintergreifabschnitten 35 bzw. 45 zu der Anlageseite 27 des Basisabschnitts 22 des Sockelelementes 21 ist etwas grösser als die Höhe H des Tragprofils 16 gewählt.

Anschliessend wird das Sockelelement 21 im Uhrzeigersinn (Pfeil 69) verdreht, bis die entsprechende Kante des Seitenschenkels 54 des Sicherungselementes 51 an dem Tragprofil 16 ansteht. Bei einer weiteren Verdrehung im Uhrzeigersinn beziehungsweise in Richtung des Pfeils 69 wird das Sicherungselement 51 angehoben (Figur 6) und gleitet über die Oberseite des Tragprofils 16 hinweg, bis das Sockelelement 21 in Richtung der Längserstreckung des Tragprofils 16 ausgerichtet ist. In dieser Stellung des Sockelelementes 21 schwenkt das Sicherungselement 51 selbstständig in seine Sicherungsstellung, in welcher das Sockelelement 21 gegen ein Zurückdrehen desselben in seine Montagestellung und damit gegen ein unerwünschtes Lösen von dem Tragprofil 16 gesichert ist.

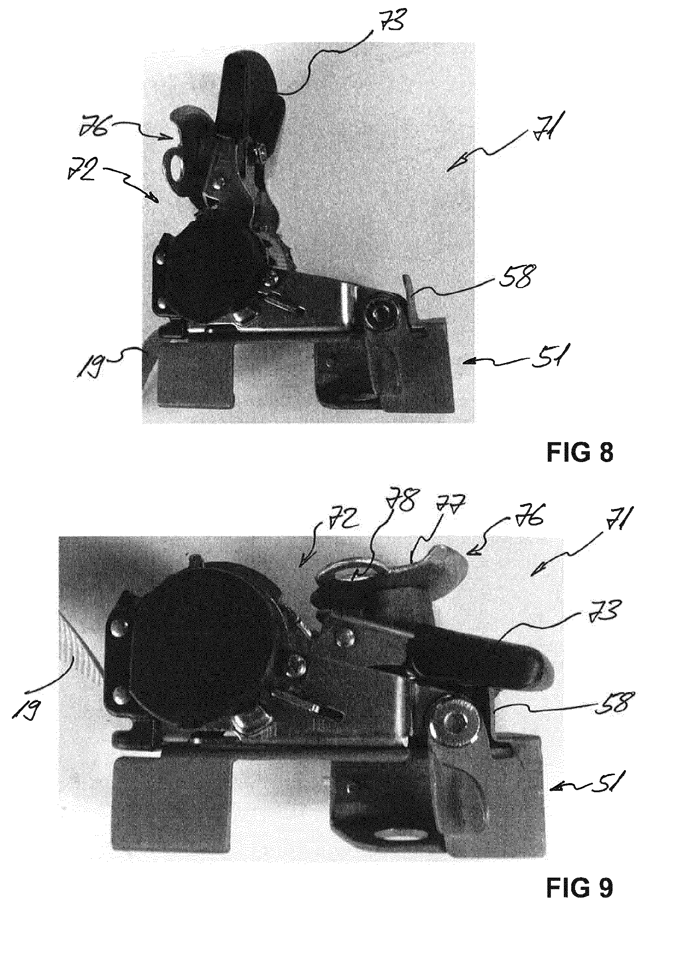

Das in den Figuren 8 und 9 gezeigte Ladungssicherungssystem 71 zur Fixierung zumindest eines Gegenstandes 18 an einem Tragprofil 16, insbesondere an einem Fahrzeug-Dachträger, umfasst ein Sockelelement 21, welches zumindest einen Teil der vorgenannten Merkmale aufweist, zur Anordnung an dem Tragprofil 16 und ein Spannmittel 19, hier in Form eines Textilspanngurtes. Das Spannmittel 19 umfasst einen Verspannmechanismus 72, hier in Form einer allgemein bekannten Spannratsche, welche an dem Sockelelement 21 angeordnet ist. Der Spannhebel 73 der Verspanneinrichtung 72 ist derart ausgebildet, dass in seiner geschlossenen, in der Figur 9 gezeigten Stellung dieser Spannhebel 73 auf dem Blockierabschnitt 58 des Sicherungselementes 51 aufliegt und damit ein unbeabsichtigtes Verschwenken des Sicherungselementes 51 in dessen Montagestellung verhindert.

An der Verspanneinrichtung 72 ist ein mit einer tellerförmigen Betätigungsfläche 77 versehenes Entriegelungselement 76 zur Entriegelung einer verspannten Verspanneinrichtung 72 vorgesehen. In der Betätigungsfläche 77 ist eine Halteöffnung 78 zur temporären Halterung eines an dem freien Ende 20 des Spannmittels 19 vorgesehenen Hakenelementes 81 ausgebildet.

Das Hakenelement 81 zum Festlegen des freien Endes 20 des Spannmittels 19 am Tragprofil 16 ist in den Figuren 10 bis 11 gezeigt. Das Hakenelement 81 weist eine umlaufende Struktur mit zwei freien Hakenenden 86 und 87 auf. Beabstandet zu den freien Hakenenden 86 und 87 ist ein erster, die Seitenabschnitte 83 und 84 verbindenden Auflagesteg 82 und sind zwei parallel dazu verlaufende, ebenfalls die Seitenabschnitte 83 und 84 verbindende Querstege 85 und 86 vorgesehen. Das freie Ende 20 des Spannmittels 19 ist an den Querstegen 85 und 86 festgelegt.

Die freien Hakenenden 86 und 87 sind gegensinnig ausgerichtet und zueinander beabstandet, so dass ein Aufnahmeraum 91 für das Tragprofil 16 zwischen den Hakenenden 86 und 87 ausgebildet ist.

An einem zum freien Hakenende 87 beabstandeten Abschnitt des Hakenelementes 81, welcher im verspannten Zustand des Spannmittels 19 mit dem Tragprofil 16 in Anlage kommt, ist eine Profilierung 88, hier in Form einer Riffelung, vorgesehen. Zumindest bereichsweise ist an einem Abschnitt des Auflagestegs 82, welcher im verspannten Zustand des Spannmittels 19 mit dem Tragprofil 16 in Anlage kommt, ist ebenfalls eine Profilierung 89, hier in Form einer Riffelung, vorgesehen.

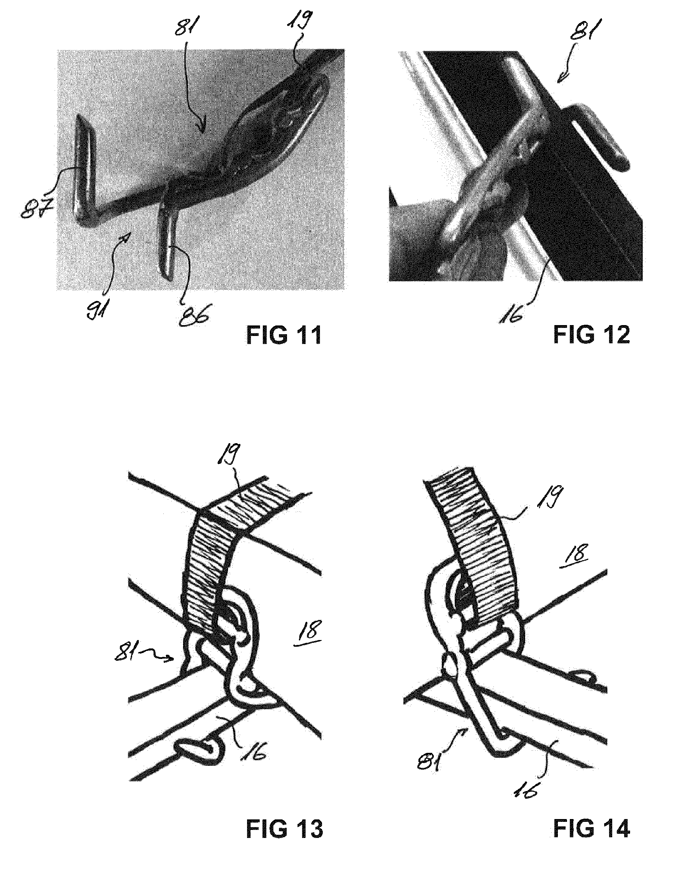

Zur Anordnung des Hakenelementes 81 (siehe Figur 12) wird dieses seitlich über das Tragprofil 16 geschoben. Die Grössenverhältnisse der jeweils von dem Auflagesteg 82 abragenden Abschnitte des Hakenelementes 81 sind derart gewählt, dass das Hakenelement 81 nach dem Überstülpen auf das Tragprofil 16 um den Auflagesteg 82 kippt und an dem Tragprofil 16 anliegt.

Wie insbesondere aus den Figuren 13 und 14 ersichtlich, wird beim Verspannen des Spannmittels 19 das Hakenelement 81 zum zu fixierenden Gegenstand 18 herangezogen und verklemmt sich mit der Oberfläche des Tragprofils 16.

### Bezugszeichenliste

| | | | |
|---|---|---|---|
| 16 | Tragprofil | 51 | Sicherungselement |
| 17 | Tragprofil | 52 | Basisabschnitt v. 51 |
| 18 | Gegenstand | 53 | Seitenschenkel v. 51 |
| 19 | Spannmittel | 54 | Seitenschenkel v. 51 |
| | | 55 | Schwenkachse v. 51 |
| 21 | Sockelelement | 56 | 1. Betätigungsabschnitt |
| 22 | Basisabschnitt v. 21 | 57 | 2. Betätigungsabschnitt |
| 23 | 1.Seitenkante v. 22 | 58 | Blockierabschnitt |
| 24 | 2. Seitenkante v. 22 | | |
| 25 | 1. Endkante v. 22 | 61 | Spielausgleichseinrichtung |
| 26 | 2. Endkante v. 22 | 62 | Stellschraube |
| 27 | Anlageseite v. 22 | | |
| 28 | Halteseite v. 22 | 66 | Einlageelement |
| | | 67 | Einlageelement |
| 31 | 1. Halteabschnitt | | |
| 32 | 1. Aufnahmeraumabschnitt | 69 | Pfeil (Verdrehrichtung) |
| 33 | 1. Montageöffnung | | |
| 34 | 1. Distanzabschnitt | 71 | Lastsicherungssystem |
| 35 | 1. Hintergreifabschnitt | 72 | Verspannmechanismus |
| 36 | innere Hintergreifabschnittseite v. 35 | 73 | Spannhebel v. 72 |
| 37 | äussere Hintergreifabschnittseite v. 35 | | |
| 38 | Profilierung bei 37 | 76 | Entriegelungselement |
| | | 77 | Betätigungsfläche v. 76 |
| 41 | 2. Halteabschnitt | 78 | Halteöffnung für 81 |
| 42 | 2. Aufnahmeraumabschnitt | | |
| 43 | 2. Montageöffnung | 81 | Hakenelement |
| 44 | 2. Distanzabschnitt | 82 | Auflagesteg |
| 45 | 2. Hintergreifabschnitt | 83 | Seitenabschnitt v. 81 |
| 46 | innere Hintergreifabschnittseite v. 45 | 84 | Seitenabschnitt v. 81 |
| | | 85 | Quersteg |
| A | Abstand 23/24 | 86 | freies Hakenende |
| B | Breite v. 16 | 87 | freies Hakenende |
| C | Abstand 36/46 | 88 | Profilierung |
| E | Abstand 31/41 | 89 | Profilierung |
| H | Höhe v. 16 | | |
| | | 91 | Aufnahmeraum für 16 |

## Patentansprüche

1. Sockelelement eines Ladungssicherungssystems (71) zur Anordnung an einem Tragprofil (16; 17), insbesondere an einem Fahrzeug-Dachträger, wobei das Sockelelement (21) einen Basisabschnitt (22) mit einer ersten Seitenkante (23) und mit einer zweiten Seitenkante (24), welche einander gegenüberliegend in einem Abstand (A) zueinander beabstandet sind, und mit einer Anlageseite (27) aufweist, welche im montierten Zustand des Sockelelementes (21) zumindest bereichsweise mit einem Abschnitt des Tragprofils (16; 17) in Anlage kommt, und einen Aufnahmeraum zur Aufnahme zumindest eines Abschnitts des Tragprofils (16; 17) aufweist, **dadurch gekennzeichnet, dass** ein erster Halteabschnitt (31) und ein zweiter Halteabschnitt (41) vom Basisabschnitt (22) ausgehend vorgesehen sind, wobei zwischen dem ersten Halteabschnitt (31) und der Anlageseite (27) des Basisabschnitts (22) ein erster Aufnahmeraumabschnitt (32) sowie eine erste Montageöffnung (33) zur Anordnung des Sockelelementes (21) an dem Tragprofil (16; 17) ausgebildet sind und wobei zwischen dem zweiten Halteabschnitt (42) und der Anlageseite (27) des Basisabschnitts (22) ein zweiter Aufnahmeraumabschnitt (42) sowie eine zweite Montageöffnung (43) zur Anordnung des Sockelelementes (21) an dem Tragprofil (16; 17) ausgebildet sind, wobei die erste Montageöffnung (33) und die zweite Montageöffnung (43) gegensinnig zueinander ausgerichtet sind und wobei der erste Halteabschnitt (31) und der zweite Halteabschnitt (41) in Richtung einer der Seitenkanten (23) des Basisabschnitts (22) in einem Abstand (E) zueinander beabstandet sind.

2. Sockelelement nach Anspruch 1, **dadurch gekennzeichnet, dass** der Abstand der beiden Halteabschnitte (31, 41) in Richtung einer der Seitenkanten (23) des Basisabschnitts (22) dem 0.5-fachen bis 2.0-fachen, vorteilhaft dem 0.7-fachen bis 1.1-fachen, des Abstandes (A) der beiden Seitenkanten (23, 24) des Basisabschnitts (22) zueinander entspricht.

3. Sockelelement nach Anspruch 1 oder 2, **dadurch gekennzeichnet, dass** der erste Halteabschnitt (31) einen sich von der Anlageseite (27) des Basisabschnitts (22) erstreckenden, ersten Distanzabschnitt (34) sowie einen sich in Richtung der zweiten Seitenkante (24) des Basisabschnitts (22) ausgerichteten, jedoch zu der Anlageseite (27) des Basisabschnitts (22) beabstandeten ersten Hintergreifabschnitt (35) aufweist und der zweite Halteabschnitt (41) einen sich von der Anlageseite (27) des Basisabschnitts (22) erstreckenden, zweiten Distanzabschnitt (44) sowie einen sich in Richtung der ersten Seitenkante (23) des Basisabschnitts (22) ausgerichteten, jedoch zu der Anlageseite (27) des Basisabschnitts (22) beabstandeten zweiten Hintergreifabschnitt (45) aufweist.

4. Sockelelement nach Anspruch 3, **dadurch gekennzeichnet, dass** der erste Hintergreifabschnitt (35) und der zweite Hintergreifabschnitt (45) einander zugewandte, in einem Abstand zueinander angeordnete, innere Hintergreifabschnittseiten (36, 46) aufweisen, welche mit einer der Seitenkanten (23) einen Winkel (α) von weniger als 90° einschliessen und welche vorteilhaft parallel zueinander verlaufen.

5. Sockelelement nach Anspruch 4, **dadurch gekennzeichnet, dass** der Abstand (C) der beiden inneren Hintergreifabschnittseiten (36, 46) zueinander zumindest dem 0.9-fachen bis 1.3-fachen, vorteilhaft dem 0.95-fachen bis 1.1-fachen, des Abstandes (A) der beiden Seitenkanten (23, 24) des Basisabschnitts (22) zueinander entspricht.

6. Sockelelement nach einem der Ansprüche 1 bis 5, **dadurch gekennzeichnet, dass** der Basisabschnitt (22) eine erste Endkante (25) und eine der ersten Endkante (25) gegenüberliegende zweite Endkante (26) aufweist, wobei die Endkanten (25, 26) quer zu den Seitenkanten (23, 24) verlaufen und zumindest eine der Endkanten (26), vorzugweise beide Endkanten, des Basisabschnitts (22) in Richtung einer der Anlageseite (27) des Basisabschnitts (22) gegenüberliegende Halteseite (28) gekröpft und vorteilhaft mit einer Profilierung versehen ist.

7. Sockelelement nach einem der Ansprüche 3 bis 6, **dadurch gekennzeichnet, dass** eine äussere Hintergreifabschnittseite (37) zumindest eines der Hintergreifabschnitte (35) der Halteabschnitte (31) in einer Richtung abgewandt zu der Auflageseite (27) des Basisabschnitts (22) gekröpft und vorteilhaft mit einer Profilierung (38) versehen ist.

8. Sockelelement nach einem der Ansprüche 3 bis 7, **dadurch gekennzeichnet, dass** der Basisabschnitt (22) in einer ersten Ebene verläuft und der erste Hintergreifabschnitt (35) des ersten Halteabschnitts (31) und/oder der zweite Hintergreifabschnitt (45) des zweiten Halteabschnitts (41) in zumindest einer zweiten Ebene verlaufen, welche im Wesentlichen parallel zu der ersten Ebene ausgerichtet ist, wobei der erste Hintergreifabschnitt (35) und der zweite Hintergreifabschnitt (45) vorteilhaft in einer gemeinsamen Ebene liegen.

9. Sockelelement nach einem der Ansprüche 1 bis 8, **dadurch gekennzeichnet, dass** ein Sicherungselement (51) zur Sicherung des Sockelelementes (21) an dem Tragprofil (16) vorgesehen ist, wobei das Sicherungselement (51) aus einer Montagestellung, in welcher das Sockelelement (21) am Tragprofil (16) anordnenbar ist, in eine Sicherungsstellung überführbar ist, in welcher das Sockelelement (21) am Tragprofil (16) gesichert ist, wobei das Sicherungselement (51) vorteilhaft einen Basisabschnitt (52) mit zwei Endkanten und zwei von dem Basisabschnitt (52) des Sicherungselementes (51) in die gleiche Richtung abragende Seitenschenkel (53, 54) aufweist, welche quer zu zumindest einer der Endkanten des Basisabschnitts (52) des Sicherungselementes (51) verlaufen.

10. Sockelelement nach Anspruch 9, **dadurch gekennzeichnet, dass** das Sicherungselement (51) verschwenkbar ist, wobei vorteilhaft benachbart zu einer der Endkanten des Basisabschnitts (52) des Sicherungselementes (51) eine Schwenkachse (55) für das Sicherungselement (51) vorgesehen ist, welche vorteilhaft an der der Auflageseite (27) des Basisabschnitts (22) des Sockelelementes (21) abgewandten Halteseite (28) angeordnet ist, wobei die Schwenkachse (55) quer zu einer der Endkanten des Basisabschnitts (52) des Sicherungselementes (51) verläuft und vorteilhaft benachbart zu einer der Endkanten (26) des Basisabschnitts (22) des Sockelelementes (21) angeordnet ist.

11. Sockelelement nach einem der Anspruch 9 oder 10, **dadurch gekennzeichnet, dass** zumindest ein erster Betätigungsabschnitt (56) zur Entsicherung des Sicherungselementes (51) an demselben vorgesehen ist, der vorteilhaft von einem der Seitenschenkel (53) des Sicherungselementes (51) abragt und weiter vorteilhaft zumindest ein zweiter Betätigungsabschnitt (57) zur Entsicherung des Sicherungselementes (51) an demselben vorgesehen ist, der vorteilhaft von dem anderen Seitenschenkel (54) des Sicherungselementes (51) abragt.

12. Sockelelement nach einem der Ansprüche 1 bis 11, **dadurch gekennzeichnet, dass** eine Spielausgleichseinrichtung (61) zum Ausgleich des Spiels zwischen dem Sockelelement (21) und dem Tragprofil (16), vorteilhaft an einem Distanzabschnitt (44) eines Halteabschnitts (41) des Sockelelementes (21), vorgesehen ist.

13. Ladungssicherungssystem zur Fixierung zumindest eines Gegenstandes (18) an einem Tragprofil (16), insbesondere an einem Fahrzeug-Dachträger, mit einem Sockelelement (21) nach einem der Ansprüche 1 bis 12 zur Anordnung an dem Tragprofil (16) und mit einem Spannmittel (19), das am Sockelelement (21) angeordnet oder anordnenbar ist.

14. Ladungssicherungssystem nach Anspruch 13, **dadurch gekennzeichnet, dass** das Spannmittel (19) einen Verspannmechanismus (72) umfasst.

15. Ladungssicherungssystem nach Anspruch 13 oder 14, **dadurch gekennzeichnet, dass** ein Hakenelement (81) zum Festlegen des freien Endes (20) des Spannmittels (19) am Tragprofil (16) vorgesehen ist, wobei das Hakenelement (81) vorteilhaft zwei gegensinnig ausgerichtete und zueinander beabstandete Hakenenden (86, 87) zur Ausbildung eines Aufnahmeraums (91) für das Tragprofil (16) zwischen sich aufweist.
